# EUROPEAN PATENT SPECIFICATION

(11) **EP 2 789 484 B1**
(45) Date of publication and mention of the grant of the patent: **18.05.2016**
(21) Application number: 13305473.4
(22) Date of filing: 11.04.2013
(51) Int. Cl.: B60J 7/00, B60J 1/20

(54) **Cross-brace assembly for a sliding fabric panel**
Querverstrebungsanordnung für verschiebbares Stoffpaneel
Ensemble de croisillons pour panneau coulissant en tissu

(43) Date of publication of application: 15.10.2014
(73) Proprietor: Webasto SE, 82131 Stockdorf (DE)
(72) Inventor: Molle, Christophe, 85140 LES ESSARTS (FR)
(74) Representative: Epping - Hermann - Fischer

(56) References cited:
- EP-A1- 2 003 004
- DE-A1- 10 204 331
- FR-A1- 2 934 522
- FR-A1- 2 959 168

## Description

### Field of the Invention

The present invention relates to sliding sheet material panels, such as fabric sunshades used in motor vehicle sunroofs, and more particularly to a cross-brace assembly for such panels.

### Background of the Invention

Sunshades for motor vehicle sunroofs are often made of fabric panels. In order to avoid sagging, the fabric panel is maintained by regularly spaced cross-braces. The ends of the cross-braces slide in guide rails.

Document FR 2934522 A1 discloses a roller blind supporting system for a motor vehicle comprising an intermediate element with an upper rail and a lower rail which are separated by a curved wall. A maintenance element and a receiving element have slides which cooperate with the upper and lower rail respectively.

Document DE 10204331 A1 describes a roller device for a vehicle with a tubular winding shaft assembled from a length direction channel section. At each end of the winding shaft bearing devices are provided respectively.

Document EP 2003004 A1 discloses a roller blind for an automobile with curve shaped maintaining bars comprising curve shaped compensation elements made of thermoplastic elastomers.

For correct operation of the sunshade, a clearance is required between the ends of the cross-braces and the walls of the guide rails. Vibrations caused by the operating conditions of the motor vehicle may thus cause a rattling of the cross-braces if there is too much clearance. Therefore recent cross-brace assembly designs use noise-damping materials at the interfaces between the cross-braces and the guide rails.

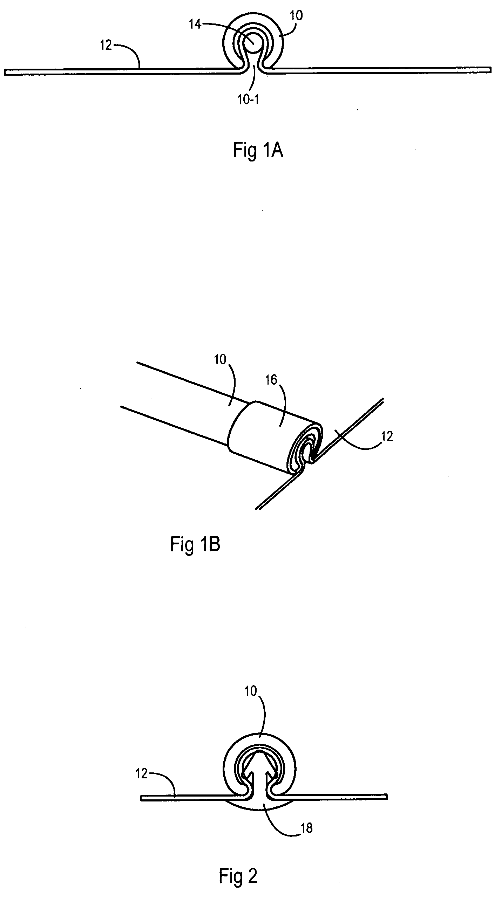

Figures 1A and 1B are an axial view and a partial perspective view of a conventional cross-brace assembly. The cross-brace comprises a tubular element 10, usually metallic, having an axial slot 10-1 throughout its length. The cross-brace is attached across the width of a fabric panel 12. The fabric has a fold that penetrates into the slot and goes around a rod 14 axially lodged in the tubular element. The diameter of the rod 14 is greater than the width of the slot, whereby the rod cannot exit the tubular element and thus holds the fabric in place.

The end portion of the cross-brace generally slides between two parallel walls of a guide rail, not shown. In order to reduce the impact noise of the tubular element 10 against the walls of the rail, the tubular element's end portion is surrounded, as shown in figure 1B , by a layer of noise damping material 16. The damping material 16, usually felt, also has good friction characteristics. The felt 16 is attached over the entire exposed circumference of the tubular element's end, whereby it may ensure its noise damping function against the upper wall of the guide rail over a variety of angular positions that the tubular element may take due to slack in the fabric.

The bottom portion of the tubular element is occupied by the fabric 12 - it is the fabric that ensures the noise damping function against the lower wall of the guide rail. The fabric however does not have optimal friction characteristics and is subject to wear.

Figure 2 is an axial view of another conventional cross-brace assembly that avoids friction between the fabric 12 and the lower wall of the guide rail. The cross-brace also comprises an axially slotted tubular element 10. However, instead of using a rod for holding the fabric inside the tubular element, this assembly uses a plastics profile 18 configured to be clipped into the slot with the fabric throughout the entire length of the tubular element. The portion of the profile 18 remaining outside the tubular element thus contacts the lower wall of the guide rail instead of the fabric. The material of the profile is chosen to have good noise damping and friction characteristics. The top portion of the tubular element may, like in figure 1A, be surrounded by a layer of felt.

Although the assembly of figure 2 may be satisfactory in terms of noise damping and fabric wear, it involves additional cost and complexity. Indeed, the profile 18 is significantly more expensive to manufacture than a simple rod 14 (figure 1A) and it requires particular care upon assembly, since such a long, small section profile will tend to warp. Therefore, the assembly of figure 2 is not adapted to mass production techniques. Moreover, the profile 18 is visible on the fabric panel, which may not be aesthetically appealing to all users.

### Summary of the Invention

There is therefore a need for an inexpensive cross-brace assembly that avoids friction of the fabric with the lower wall of the guide rail.

This need is addressed by a shoe adapted for axial insertion into an end portion of an axially slotted tubular element, comprising a rib member adapted to fit in the slot, having a height greater than the wall thickness of the tubular element and a length smaller than the length of the tubular element; and two transversal members attached respectively to the head and the foot of the rib member, each having a width greater than the width of the slot.

According to an embodiment, the shoe comprises an end flange defining an axial stop for the shoe.

According to an embodiment, the width of the rib member is selected such that the rib member forcefully fits in the slot.

According to an embodiment, the shoe comprises a tapered member axially extending the rib member.

A cross-brace assembly for guiding a panel in slide rails may comprise an axially slotted tubular cross-brace; a rod axially lodged inside the cross-brace; a sheet material panel having a fold penetrating into the slot and surrounding the rod; and shoe as mentioned above, fitted in an end portion of the cross-brace, whereby the sheet material is locally sandwiched between the cross-brace outer wall and the outer transversal member of the shoe, and the inner transversal member of the shoe rests between the rod and the slot.

According to an embodiment, the width of the rib member of the shoe is greater than the gap left by the sheet material in the slot, whereby the shoe is forcefully fitted in the cross-brace and is maintained in place by friction.

According to an embodiment, the inner transversal member of the shoe has a concave surface adapted to the shape of the rod.

According to an embodiment, the outer wall of the cross-brace comprises a layer of noise-damping material.

### Brief Description of the Drawings

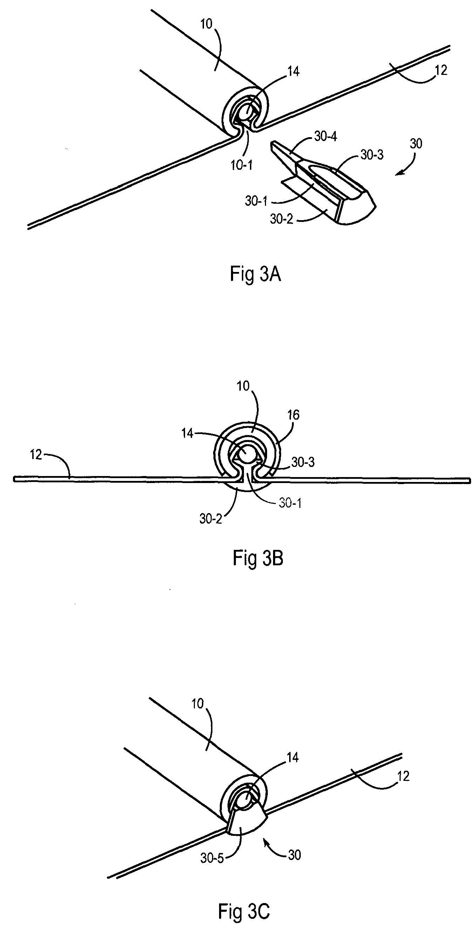

Other advantages and features will become more clearly apparent from the following description of particular embodiments of the invention provided for exemplary purposes only and represented in the appended drawings, in which:
▪ Figures 1A and 1B are an axial view and a partial perspective view of a conventional cross-brace assembly for a fabric sliding sunshade;
▪ Figure 2 is an axial view of another conventional cross-brace assembly;
▪ Figure 3A is a partial perspective view of an embodiment of a cross-brace assembly, showing a step before insertion of a specifically designed shoe; and
▪ Figures 3B and 3C are an axial section view and a partial perspective view of the cross-brace assembly of figure 3A, with the shoe in position.

### Detailed Description of the Preferred Embodiments

A cross-brace assembly embodiment disclosed herein is based upon the structure of figures 1A and 1B, which is relatively inexpensive to manufacture. However, as previously stated, if no particular measures are taken with this conventional structure, the sheet material or fabric is in direct frictional contact with the lower wall of a guide rail and is subject to wear, especially because the ends of the cross-braces tend to exert additional pressure on the fabric against the lower wall.

Figures 3A to 3C illustrate different views of an improved cross-brace assembly that prevents contact between the fabric and the lower wall of the guide rail beneath the cross-brace end portion. Same elements as those in figures 1A and 1B are designated by same references.

A shoe element 30 is configured to be inserted axially into the end portion of the finished conventional cross-brace assembly of figures 1A and 1B. The shoe element has a squat shape, with a length significantly smaller than the length of the cross-brace.

Figure 3A shows the shoe 30 in perspective view before insertion. The shoe 30 may be a standalone component made of injection molded plastics material, having adequate noise damping and friction characteristics. Indeed, this shoe will slide in contact with the lower wall of the guide rail, instead of the fabric 12.

Figure 3B is an axial section view of the cross-brace assembly end portion, with the shoe 30 in place. The section of the shoe 30 is thus revealed in this figure. The shoe has a central rib member 30-1 adapted to fit in the slot 10-1 of the tubular cross-brace 10. The rib member's height is greater than the wall thickness of the cross-brace. The shoe further comprises two transversal members 30-2, 30-3, attached respectively to the foot and the head of the rib member 30-1.

The transversal member 30-2 rests outside the cross-brace, and sandwiches the layer of fabric 12 exiting the slot 10-1 against the outer wall of the cross-brace. As shown, this outer transversal member 30-2 may extend generously on both sides of the rib member, protecting the fabric 12, and have a convex shape promoting a sliding motion with an angular offset in both directions on a lower wall of a guide rail (not shown). The length of the shoe, thus of member 30-2, is preferably adapted to the height of the guide-rail walls, such that the lower wall never contacts the fabric under normal operating conditions of the sunshade.

The transversal member 30-3 rests inside the cross-brace, between the rod 14 and the fabric entering through the slot 10-1. As shown, the inner transversal member 30-3 is wider that the slot, so that it cannot exit the slot radially, and its upper surface may be concave so that it adapts to the shape of the rod 14 and fits better in the space left between the rod and the slot.

Preferably, the width of the rib member 30-1 is slightly greater than the gap left in the slot between the fabric layers, whereby the shoe is forcefully fitted into the cross-brace end and is maintained in place by friction. Then, in order to facilitate the insertion of the shoe, as shown in figure 3A, the rib member may have a tapered axial extension 30-4.

As shown in figure 3B, the outer wall of the cross-brace may be surrounded by a noise-damping layer 16, like in figure 1B.

Figure 3C is a perspective view of the cross-brace with the shoe 30 in place. This view clearly reveals the configuration of the shoe's terminal portion. The shoe preferably comprises a transversal flange 30-5 configured to stop the axial penetration of the shoe into the cross-brace. The fully inserted position of the shoe is thus defined by the abutment of the flange 30-5 against the end wall of the cross-brace. This flange thus avoids migration of the shoe further into the cross-brace during operation of the sunshade in case the frictional maintenance of the shoe, by the pressure of the slot walls and fabric on the central rib member 30-1, is insufficient. Undesired extraction of the shoe during operation is prevented by abutment of the flange 30-5 against an opposing wall of the guide rail (not shown).

A cross-brace assembly has been described herein in the context of a sliding sunshade for a motor vehicle. The assembly is however adapted to any situation requiring the guidance in slide rails of panels made of lank sheet material.

## Claims

1. A cross-brace assembly for guiding a panel in slide rails, comprising:
- an axially slotted tubular cross-brace (10);
- a rod (14) axially lodged inside the cross-brace (10) ;
- a sheet material panel (12) having a fold penetrating into the slot (10-1) and surrounding the rod (14); and
- a shoe (30) comprising a rib member (30-1) adapted to fit in the slot (10-1), having a height greater than the wall thickness of the tubular cross-brace (10) and a length smaller than the length of the tubular cross-brace (10) and the shoe (30) comprising two transversal members (30-2, 30-3) attached respectively to the head and the foot of the rib member (30-1), each having a width greater than the width of the slot (10-1), wherein the shoe (30) is fitted in an end portion of the cross-brace (10), whereby the sheet material (12) is locally sandwiched between the cross-brace outer wall and the outer transversal member (30-2) of the shoe (30), and the inner transversal member (30-3) of the shoe (30) rests between the rod (14) and the slot (10-1).

2. The cross-brace assembly in accordance with claim 1, wherein the shoe (30) comprises an end flange (30-5) defining an axial stop for the shoe (30).

3. The cross-brace assembly in accordance with claim 1, wherein the width of the rib member (30-1) is selected such that the rib member (30-1) forcefully fits in the slot (10-1).

4. The cross-brace assembly in accordance with claim 3, wherein the shoe (30) comprises a tapered member (30-4) axially extending the rib member (30-1).

5. The cross-brace assembly in accordance with claim 1, wherein the width of the rib member (30-1) of the shoe (30) is greater than the gap left by the sheet material (12) in the slot (10-1), whereby the shoe (30) is forcefully fitted in the cross-brace (10) and is maintained in place by friction.

6. The cross-brace assembly in accordance with claim 1, wherein the inner transversal member (30-3) of the shoe (30) has a concave surface adapted to the shape of the rod (14).

7. The cross-brace assembly in accordance with claim 1, wherein the outer wall of the cross-brace (10) comprises a layer of noise-damping material (16).

## Patentansprüche

1. Querverstrebungsanordnung zum Führen einer Bahn in Gleitschienen, umfassend:
- eine axial geschlitzte röhrenförmige Querstrebe (10),
- einen axial in der Querstrebe (10) gelagerten Stab (14),
- eine flächige Materialbahn (12) mit einer Falte, die in den Schlitz (10-1) eindringt und den Stab (14) umgibt, und
- einen Schuh (30), der ein Rippenelement (30-1) umfasst, das geeignet ist, in den Schlitz (10-1) zu passen, und eine Höhe, die größer als die Wanddicke der röhrenförmigen Querstrebe (10) ist, und eine Länge, die kleiner als die Länge der röhrenförmigen Querstrebe (10) ist, hat und wobei der Schuh (30) zwei Querelemente (30-2, 30-3) umfasst, die am Kopf und am Fuß des Rippenelements (30-1) angebracht sind und jeweils eine Breite haben, die größer als die Breite des Schlitzes (10-1) ist, wobei der Schuh (30) in einem Endabschnitt der Querstrebe (10) eingepasst ist, wodurch die flächige Materialbahn (12) lokal zwischen der äußeren Wand der Querstrebe und dem äußeren Querelement (30-2) des Schuhs (30) angeordnet ist und das innere Querelement (30-3) des Schuhs (30) zwischen dem Stab (14) und dem Schlitz (10-1) angeordnet ist.

2. Querverstrebungsanordnung nach Anspruch 1, wobei der Schuh (30) einen Endflansch (30-5) umfasst, der einen axialen Anschlag für den Schuh (30) definiert.

3. Querverstrebungsanordnung nach Anspruch 1, wobei die Breite des Rippenelements (30-1) so gewählt ist, dass das Rippenelement (30-1) kraftschlüssig in dem Schlitz (10-1) sitzt.

4. Querverstrebungsanordnung nach Anspruch 3, wobei der Schuh (30) ein sich verjüngendes Element (30-4) umfasst, das das Rippenelement (30-1) axial verlängert.

5. Querverstrebungsanordnung nach Anspruch 1, wobei die Breite des Rippenelements (30-1) des Schuhs (30) größer als die durch die flächige Materialbahn (12) in dem Schlitz (10-1) belassene Lücke ist, wodurch der Schuh (30) kraftschlüssig in der Querstrebe (10) angebracht ist und durch Reibung festgehalten wird.

6. Querverstrebungsanordnung nach Anspruch 1, wobei das innere Querelement (30-3) des Schuhs (30) eine konkave Fläche hat, die an die Form des Stabs (14) angepasst ist.

7. Querverstrebungsanordnung nach Anspruch 1, wobei die äußere Wand der Querstrebe (10) eine Schicht aus geräuschdämmendem Material (16) umfasst.

## Revendications

1. Ensemble de croisillon pour guider un panneau dans des rails de coulissement, comprenant :
- un croisillon tubulaire à fente axiale (10) ;
- une tige (14) logée axialement à l'intérieur du croisillon (10) ;
- un panneau de matériau en feuille (12) ayant un pli pénétrant dans la fente (10-1) et entourant la tige (14) ; et
- un patin (30) comprenant un organe de nervure (30-1) prévu pour s'adapter dans la fente (10-1), ayant une hauteur supérieure à l'épaisseur de paroi du croisillon tubulaire (10) et une longueur inférieure à la longueur du croisillon tubulaire (10) et le patin (30) comprenant deux organes transversaux (30-2, 30-3) attachés respectivement à la tête et au pied de l'organe de nervure (30-1), chacun ayant une largeur supérieure à la largeur de la fente (10-1), le patin (30) étant ajusté dans une portion d'extrémité du croisillon (10), le matériau en feuille (12) étant ainsi pris en sandwich entre la paroi extérieure du croisillon et l'organe transversal extérieur (30-2) du patin (30), et l'organe transversal intérieur (30-3) du patin (30) reposant entre la tige (14) et la fente (10-1).

2. Ensemble de croisillon selon la revendication 1, dans lequel le patin (30) comprend une bride d'extrémité (30-5) définissant une butée axiale pour le patin (30).

3. Ensemble de croisillon selon la revendication 1, dans lequel la largeur de l'organe de nervure (30-1) est choisie de telle sorte que l'organe de nervure (30-1) s'ajuste par force dans la fente (10-1).

4. Ensemble de croisillon selon la revendication 3, dans lequel le patin (30) comprend un organe effilé (30-4) prolongeant axialement l'organe de nervure (30-1).

5. Ensemble de croisillon selon la revendication 1, dans lequel la largeur de l'organe de nervure (30-1) du patin (30) est supérieure à l'espace laissé par le matériau en feuille (12) dans la fente (10-1), le patin (30) étant ajusté par force dans le croisillon (10) et étant maintenu en place par friction.

6. Ensemble de croisillon selon la revendication 1, dans lequel l'organe transversal interne (30-3) du patin (30) présente une surface concave adaptée à la forme de la tige (14).

7. Ensemble de croisillon selon la revendication 1, dans lequel la paroi extérieure du croisillon (10) comprend une couche de matériau atténuant les sons (16).
